# FASCICULE DE BREVET EUROPEEN

(11) **EP 3 811 278 B1**
(45) Date de publication et mention de la délivrance du brevet: **21.12.2022**
(21) Numéro de dépôt: 19790632.4
(22) Date de dépôt: 24.07.2019
(51) Int. Cl.: G06K 7/10, G06K 17/00, F01D 25/00

(54) **SYSTÈME DE CONTRÔLE DE PIÈCES D'UN TURBORÉACTEUR PAR IDENTIFICATION RADIOFRÉQUENCE AVEC ANTENNE INTÉGRÉE**
SYSTEM ZUR ÜBERPRÜFUNG VON TURBINENTRIEBWERKSTEILEN MITTELS HOCHFREQUENZIDENTIFIZIERUNG MIT INTEGRIERTER ANTENNE
SYSTEM FOR VERIFYING TURBOJET ENGINE PARTS USING RADIO FREQUENCY IDENTIFICATION, COMPRISING AN INTEGRATED ANTENNA

(30) Priorité: 31.07.2018 FR 1857170
(43) Date de publication de la demande: 28.04.2021
(73) Titulaire: SAFRAN AIRCRAFT ENGINES, 75015 Paris (FR)
(72) Inventeur: LHOMMEAU, Tony, Alain, Roger, Joël, 77550 Moissy-Cramayel (FR); BASTARD, Guillaume Philippe Camille, 77550 Moissy-Cramayel (FR); MOUTON, Hervé Jean Albert, 77550 Moissy-Cramayel (FR); CANTEAU, Philippe Roger Jacques, 77550 Moissy-Cramayel (FR)
(74) Mandataire: Brevalex
(86) Numéro de dépôt international: PCT/FR2019/051833
(87) Numéro de publication internationale: WO 2020/025881

(56) Documents cités:
- FR-A1- 3 053 958
- US-A1- 2007 114 280
- US-A1- 2008 125 950
- US-A1- 2011 280 279
- US-A1- 2017 369 188
- US-A1- 2018 114 599

## Description

### DOMAINE TECHNIQUE

L'invention se situe dans le domaine de la maintenance des aéronefs et, plus précisément, dans le domaine du suivi des pièces montées dans un turboréacteur. Elle concerne un système de contrôle de pièces d'un turboréacteur dans lequel le contrôle s'effectue au moyen d'un dispositif interrogateur agencé pour pouvoir communiquer avec des étiquettes RFID associées auxdites pièces. L'invention concerne également un ensemble de contrôle comprenant un tel système de contrôle, au moins une étiquette RFID et un dispositif interrogateur. L'invention concerne enfin un turboréacteur d'aéronef comprenant le système de contrôle, au moins une étiquette RFID et un dispositif interrogateur.

### ÉTAT DE LA TECHNIQUE ANTÉRIEURE

La maintenance d'un aéronef implique dans certaines situations d'identifier les pièces équipant un turboréacteur. Cette identification repose sur des informations relatives aux pièces telles que le nom du fabricant, le numéro de série, le numéro de pièce ou la date d'installation de la pièce. De manière conventionnelle, ces informations sont adjointes aux pièces équipant un turboréacteur par gravure de ces pièces ou par fixation d'une plaque d'identification. Après l'intégration des pièces dans le turboréacteur, la lecture des informations peut être difficile voire impossible sans démontage de ces pièces ou des pièces environnantes. En outre, les pièces d'un turboréacteur sont logées dans une nacelle et ne sont accessibles qu'après ouverture d'un capot. Une règlementation stricte encadre les interventions sur un turboréacteur et notamment l'ouverture de ces capots nacelle. Il est en particulier nécessaire de suivre un protocole spécifique impactant de manière négative la durée d'intervention. De plus, l'ouverture des capots nacelle peut être empêchée par des vents forts, rendant impossible l'identification des pièces.

Une solution permettant d'accéder à des informations relatives aux pièces équipant un turboréacteur sans avoir à ouvrir de capot nacelle consiste à équiper les pièces d'étiquettes RFID contenant ces informations. Le passage d'un lecteur interrogateur au voisinage des étiquettes RFID permet de récolter les informations. L'échange de données est réalisé au moyen d'ondes électromagnétiques à des fréquences comprises entre environ 100 kHz (kilohertz) et quelques gigahertz. Un signal radiofréquence d'interrogation est d'abord émis par le lecteur interrogateur vers chacune des étiquettes RFID. Chaque étiquette RFID située dans un voisinage suffisamment proche du lecteur interrogateur pour recevoir le signal radiofréquence d'interrogation réémet à destination du lecteur interrogateur un signal radiofréquence de réponse contenant les informations contenues dans une puce de l'étiquette RFID. Cette solution basée sur la radio-identification permet d'accéder facilement et rapidement aux informations associées à une pluralité de pièces d'un turboréacteur, y compris lorsque ces pièces sont entourées d'autres pièces dans un environnement dense. Elle est notamment décrite dans la demande de brevet EP 3 196 425 A1 comme solution pour communiquer à un appareil mobile externe à l'aéronef une information relative à un niveau d'huile dans une turbomachine. Néanmoins, l'échange de signaux électromagnétiques entre des pièces d'un turboréacteur et l'extérieur est fortement perturbé par la paroi de la nacelle enveloppant le turboréacteur. Cette paroi est généralement composée d'une structure multicouche au moins partiellement conductrice électriquement. Elle est par exemple formée par une première couche de composite carbone, une deuxième couche en nid d'abeille, une troisième couche de composite carbone et une quatrième couche en mailles de bronze. La paroi de la nacelle forme alors une cage de Faraday avec un affaiblissement de l'ordre de 40 à 80 dB. Cette barrière électromagnétique pourrait éventuellement être franchie en augmentant fortement la puissance des signaux échangés entre le lecteur interrogateur et les puces RFID. Toutefois, cette puissance doit être limitée en raison du risque d'interférences avec d'autres équipements de l'aéronef voire avec des équipements d'autres aéronefs.

La demande de brevet US 2011/280279 A1 décrit un système de mesure de température par liaison sans fil pour environnement sévère. Le système de mesure peut être appliqué à la mesure de température au sein d'un turboréacteur, notamment sur une aube. Il comprend un émetteur, un capteur de température et un récepteur. Le capteur comprend une antenne, une couche diélectrique et une diode. La couche diélectrique est disposée sur un substrat pouvant notamment être une aube de turbine. Elle présente une constante diélectrique variable en fonction de la température. Lors de l'émission d'un signal d'interrogation au capteur, la composante de ce signal à la fréquence de résonance de l'ensemble antenne et couche diélectrique est réémise par l'antenne avec les harmoniques de cette fréquence. Le récepteur reçoit ce signal de réponse et détermine la température d'après la fréquence de résonance.

La demande de brevet FR 3 053 958 A1 décrit un panneau équipé pour une cabine d'aéronef comprenant un panneau, une ou plusieurs antennes RFID, un lecteur RFID et un conducteur électrique reliant chaque antenne au lecteur RFID. Les antennes RFID sont fixées sur l'une des faces du panneau ou intégrées à ce panneau. Le panneau équipé permet de récupérer des informations contenues dans des tags RFID installés sur des équipements présents dans la cabine.

La demande de brevet US 2017/369188 A1 décrit un panneau composite à antenne intégrée pouvant être fixé sur un capot de soufflante. Il comprend une structure support, une antenne et un connecteur accessible du côté intérieur du panneau. Le connecteur est prévu pour connecter l'antenne à un capteur situé du côté intérieur du panneau, les informations du capteur étant envoyées à un dispositif externe.

La demande de brevet US 2007/114280 A1 décrit un système d'identification de composants d'un aéronef et de suivi de maintenance par identification radiofréquence. Le système comprend des étiquettes RFID positionnées sur des composants de l'aéronef et un lecteur permettant de lire les étiquettes RFID.

Compte tenu de ce qui précède, l'invention a pour objectif de fournir une solution permettant d'identifier facilement des pièces d'un turboréacteur et éventuellement d'obtenir des informations supplémentaires relatives à ces pièces sans avoir à démonter une partie du turboréacteur et même sans avoir à ouvrir un capot de nacelle. L'invention a encore pour objectif de fournir un système dont les coûts de conception, de fabrication et de maintenance sont compatibles avec une utilisation à une échelle industrielle.

### EXPOSÉ DE L'INVENTION

À cet effet, l'invention repose sur la technologie de radio-identification, également appelée technologie RFID d'après l'expression anglo-saxonne « radio frequency identification ». Elle propose d'intégrer à la nacelle dans laquelle est logé le turboréacteur des éléments de liaison radiofréquences permettant de relayer des signaux radiofréquences entre l'intérieur de la nacelle et son environnement extérieur sans nécessiter une ouverture d'un capot de nacelle.

Plus précisément, l'invention a pour objet un système de contrôle de pièces d'un turboréacteur, le turboréacteur étant logé dans un compartiment de nacelle délimité par une paroi de nacelle et comportant au moins une pièce équipée d'une étiquette RFID. Le système de contrôle comprend :
▪ une antenne interne logée dans le compartiment de nacelle, l'antenne interne étant agencée pour permettre l'échange de signaux radiofréquences avec l'étiquette RFID,
▪ un dispositif d'interface disposé au moins en partie dans le compartiment de nacelle et comportant un point d'accès disposé hors du compartiment de nacelle, le dispositif d'interface étant agencé pour pouvoir être connecté à un dispositif interrogateur agencé pour communiquer avec l'étiquette RFID, et
▪ une ligne de transmission connectant le dispositif d'interface à l'antenne interne.

La communication entre un dispositif interrogateur, également appelé « lecteur RFID », et une étiquette RFID implique de manière conventionnelle la transmission, depuis le dispositif interrogateur vers l'étiquette RFID, d'un signal radiofréquence d'interrogation et la transmission, depuis l'étiquette RFID vers le dispositif interrogateur, d'un signal radiofréquence de réponse encodant des informations contenues dans une puce électronique de l'étiquette RFID. Les signaux radiofréquences présentent par exemple des fréquences dans une plage comprise entre 860 MHz (mégahertz) et 960 MHz. La technologie RFID peut être passive, active ou semi-active. Une étiquette RFID de technologie passive est uniquement alimentée par le signal électromagnétique émis par le dispositif interrogateur. Ce signal permet à la fois d'alimenter l'étiquette RFID et de lui transmettre une requête pour l'envoi des informations contenues dans une puce électronique de l'étiquette RFID. Une étiquette RFID de technologie active est équipée ou associée à une pile lui permettant de fournir l'énergie nécessaire à l'envoi d'un signal contenant les informations de la puce électronique. Une étiquette RFID de technologie semi-active est également équipée ou associée à une pile ; toutefois, l'énergie fournie par la pile est uniquement utilisée pour le stockage d'informations dans la puce électronique, et non pour l'émission du signal contenant ces informations.

Il est à noter que le système de contrôle de pièces est adapté au contrôle simultané d'une pluralité de pièces équipées chacune d'une étiquette RFID. Afin de limiter les risques de collision entre les signaux radiofréquences de réponse émis par plusieurs étiquettes RFID, le système de contrôle peut intégrer un mécanisme de gestion de collision. Ce mécanisme consiste par exemple en un algorithme de gestion de collision intégré dans le dispositif interrogateur.

L'antenne interne est par exemple montée sur une surface interne de la paroi de nacelle. Elle peut également être montée sur un carter du turboréacteur. Elle peut être de tout type dès lors qu'elle est adaptée à des signaux radiofréquences compatibles avec la technologie RFID. Il s'agit par exemple d'une antenne omnidirectionnelle, d'une antenne quart d'onde, d'une antenne dipolaire, d'une antenne à plan de sol, appelée « ground plane antenna » en anglais, d'une antenne parabolique ou d'une antenne quadriquad. Dans une forme particulière de réalisation, l'antenne interne est agencée pour émettre et recevoir des signaux radiofréquences dans une plage de fréquences comprise entre 860 MHz et 960 MHz.

Selon une première variante de réalisation, le point d'accès du dispositif d'interface comprend un connecteur coaxial. Ce connecteur coaxial est accessible depuis l'extérieur du compartiment de nacelle. Il est par exemple monté sur la surface externe de la paroi de nacelle ou dans l'épaisseur de la paroi de nacelle. Le connecteur coaxial est par exemple un connecteur BNC.

Selon une deuxième variante de réalisation, le point d'accès du dispositif d'interface comprend une antenne externe. Cette antenne externe est disposée à l'extérieur du compartiment de nacelle. Elle est par exemple montée sur la surface externe de la paroi de nacelle. L'antenne externe peut être de tout type, dès lors qu'elle est adaptée à des signaux radiofréquences compatibles avec la technologie RFID. Il s'agit par exemple d'une antenne omnidirectionnelle, d'une antenne quart d'onde, d'une antenne dipolaire, d'une antenne à plan de sol, d'une antenne parabolique ou d'une d'antenne quadriquad. Dans une forme particulière de réalisation, l'antenne externe est agencée pour émettre et recevoir des signaux radiofréquences dans une plage de fréquences UHF comprise entre 860 MHz et 960 MHz. Afin de limiter les perturbations aérodynamiques pendant le vol de l'aéronef, l'antenne externe peut être intégrée dans un boîtier présentant une forme aérodynamique monté sur la surface externe de la paroi de nacelle. Le boîtier présente par exemple une forme d'aileron de requin.

Il est à noter que le dispositif d'interface peut comporter une pluralité de points d'accès. Par ailleurs, les première et deuxième variantes de réalisation sont tout à fait compatibles entre elles. Le dispositif d'interface peut comporter à la fois un ou plusieurs connecteurs coaxiaux ainsi qu'une ou plusieurs antennes externes. Dans une forme particulière de réalisation, le dispositif d'interface comporte un connecteur coaxial et une antenne externe. La connexion entre un dispositif interrogateur et l'antenne interne peut ainsi être réalisée par une liaison filaire ou par une liaison sans fil.

Le dispositif d'interface peut comporter, en outre, une unité de conversion connectée entre l'antenne externe et l'antenne interne et agencée pour convertir un signal dans un premier protocole de communication en un signal dans un second protocole de communication, et inversement, le premier protocole de communication étant compatible avec le dispositif interrogateur et le second protocole de communication étant compatible avec l'étiquette RFID. En particulier, l'unité de conversion peut être agencée pour convertir, d'une part, un signal radiofréquence d'interrogation émis par le dispositif interrogateur dans le premier protocole de communication en un signal radiofréquence d'interrogation dans le second protocole de communication et, d'autre part, un signal radiofréquence de réponse émis par l'étiquette RFID dans le second protocole de communication en un signal radiofréquence de réponse dans le premier protocole d'interrogation. De manière générale, le second protocole de communication est un protocole de communication RFID. Le premier protocole de communication peut notamment être un protocole Wifi, un protocole Bluetooth, un protocole Zigbee ou un protocole propriétaire.

Le système de contrôle peut comporter, en outre, une antenne relais installée au sol, agencée pour transmettre des signaux radiofréquences provenant d'un dispositif interrogateur vers l'antenne externe du dispositif d'interface, et réciproquement. Le système de contrôle peut comporter une pluralité d'antennes relais, chaque antenne relais étant avantageusement disposée à proximité d'une zone de parking d'un aéronef, à proximité d'un hangar pour aéronef ou à l'intérieur d'un tel hangar. Un même dispositif interrogateur peut alors être utilisé pour interroger, depuis un unique emplacement, ou depuis un nombre limité d'emplacements, une pluralité de turboréacteurs équipant différents aéronefs.

Selon une forme particulière de réalisation, le dispositif d'interface comporte, en outre, un répéteur amplificateur bidirectionnel connecté entre l'antenne externe et l'antenne interne. En cas de pluralités d'antennes internes, le répéteur amplificateur peut être connecté au niveau d'une branche commune des lignes de transmission, de manière à amplifier les signaux parcourant l'ensemble des lignes de transmission. Le répéteur amplificateur est avantageusement agencé pour, d'une part, recevoir un signal radiofréquence d'interrogation émis par le dispositif interrogateur, l'amplifier et l'envoyer vers l'antenne interne et, d'autre, recevoir un signal radiofréquence de réponse émis par l'étiquette RFID, l'amplifier et l'envoyer vers l'antenne externe.

Selon une autre forme particulière de réalisation, le dispositif d'interface comporte, en outre, un module d'autorisation agencé pour recevoir une information d'état moteur relative à l'état allumé ou éteint du turboréacteur et empêcher ou autoriser l'émission d'un signal radiofréquence d'interrogation par l'antenne interne en fonction de ladite information d'état moteur. Cette forme de réalisation est particulièrement appropriée pour la deuxième variante de réalisation, dans laquelle le point d'accès comporte une antenne externe susceptible de recevoir un signal radiofréquence d'interrogation alors que le turboréacteur est en fonctionnement. La transmission de ce signal radiofréquence dans le compartiment de nacelle risque de perturber certains signaux circulant au sein du turboréacteur et participant à sa régulation. Pour la première variante de réalisation, dans laquelle le point d'accès comporte un connecteur coaxial, le risque d'émission d'un signal radiofréquence d'interrogation est déjà limité par la règlementation qui interdit à un opérateur d'approcher d'un turboréacteur en fonctionnement. Néanmoins, un module d'autorisation peut être prévu afin d'assurer une sécurité supplémentaire. L'état allumé ou éteint du turboréacteur correspond par exemple à une vitesse de rotation du turboréacteur, le turboréacteur étant considéré comme éteint lorsque sa vitesse de rotation est nulle et étant considéré comme allumé lorsque sa vitesse de rotation est non nulle. L'information d'état moteur peut être émise par un système de commande de l'aéronef, par exemple un système central de commande ou un système de régulation électronique numérique à pleine autorité du moteur, mieux connu sous l'acronyme FADEC pour l'expression anglo-saxonne « Full Authority Digital Engine Control ».

L'étiquette RFID peut contenir une information relative à une identification de la pièce qu'elle équipe, une information relative à une durée de vie de ladite pièce et/ou une information relative à la présence d'une substance prédéterminée dans ladite pièce. L'étiquette RFID peut notamment contenir un numéro de série, un numéro de produit, une indication relative au fabricant, une durée de vie estimée de la pièce, une date de remplacement prévu de la pièce et/ou une information relative à la présence d'une substance dangereuse ou toxique.

La paroi de nacelle comporte typiquement un capot de soufflante et un capot de coeur. Le point d'accès du dispositif d'interface peut alors être monté sur le capot de soufflante ou le capot de coeur. Plus précisément, il peut être monté sur une surface externe du capot de soufflante ou du capot de coeur.

Le système de contrôle peut comporter une pluralité d'antennes internes logées dans le compartiment de nacelle et une pluralité de lignes de transmission, les lignes de transmission connectant le dispositif d'interface à chaque antenne interne. Les antennes internes sont de préférence disposées en différentes positions à l'intérieur du compartiment de nacelle. Chaque antenne interne est connectée à au moins un point d'accès par une ligne de transmission. De préférence, chaque antenne interne est connectée à l'ensemble des points d'accès. Ainsi, depuis un même point d'accès, des étiquettes RFID disposées en différentes positions du turboréacteur peuvent être interrogées.

Chaque ligne de transmission assure la connexion électrique entre un point d'accès et une antenne interne. Plusieurs lignes de transmission peuvent comporter un tronçon commun afin de limiter leur longueur totale et donc le poids du système de contrôle. En particulier, un tronçon commun peut être prévu pour traverser la paroi de nacelle. Dans une forme particulière de réalisation, chaque ligne de transmission comprend un câble coaxial. De préférence, le câble coaxial est blindé.

L'invention a également pour objet un ensemble de contrôle de pièces d'un turboréacteur comprenant le système de contrôle de pièces tel que décrit précédemment, une ou plusieurs étiquettes RFID chacune apte à équiper une pièce du turboréacteur et un dispositif interrogateur agencé pour communiquer avec les étiquettes RFID via le système de contrôle.

L'invention a encore pour objet un turboréacteur d'aéronef agencé pour être logé dans un compartiment de nacelle délimité par une paroi de nacelle et comprenant le système de contrôle de pièces tel que décrit précédemment et une ou plusieurs étiquettes RFID équipant chacune une pièce du turboréacteur.

### BRÈVE DESCRIPTION DES DESSINS

D'autres caractéristiques, détails et avantages de l'invention ressortiront à la lecture de la description qui va suivre, donnée uniquement à titre d'exemple et faite en référence aux dessins annexés pour lesquels :
- la figure 1 représente schématiquement un premier exemple d'ensemble de contrôle de pièces d'un turboréacteur selon l'invention ;
- la figure 2 représente schématiquement, dans une vue en coupe transversale, un turboréacteur d'aéronef équipé d'un deuxième exemple d'ensemble de contrôle de pièces selon l'invention.

### EXPOSÉ DÉTAILLÉ DE MODES DE RÉALISATION PARTICULIERS

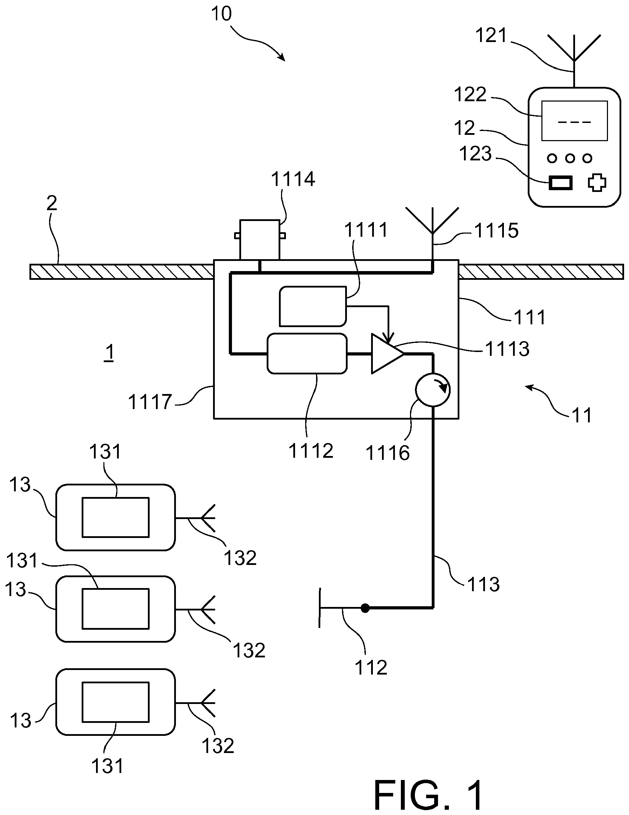

La figure 1 représente schématiquement un premier exemple d'ensemble de contrôle de pièces d'un turboréacteur selon l'invention. Le turboréacteur, non représenté, comprend un ensemble de pièces et/ou de composants disposés dans un compartiment de nacelle 1. Ce compartiment est délimité par une paroi de nacelle 2 typiquement formée par une structure multicouche composite. L'ensemble de contrôle 10 comporte un système de contrôle 11, un dispositif interrogateur 12 et trois étiquettes RFID 13. Chaque étiquette RFID 13 est destinée à être associée à une pièce ou à un composant du turboréacteur. Elle est par exemple collée, soudée ou autrement fixée à la pièce ou au composant. Elle comprend une puce électronique 131 contenant des informations relatives à la pièce ou au composant auquel elle est associée et une antenne 132. Les informations relatives à la pièce ou au composant portent par exemple sur une identification de la pièce, sur sa durée de vie ou sur le fait qu'elle contient une ou plusieurs substances dangereuses ou toxiques.

Le système de contrôle 11 comprend un dispositif d'interface 111, une antenne interne 112 et un câble coaxial 113 connectant le dispositif d'interface 111 à l'antenne interne 112. Le dispositif d'interface 111 comporte un module d'autorisation 1111, une unité de conversion 1112, un répéteur amplificateur 1113, un connecteur BNC 1114, une antenne externe 1115 et un circulateur 1116. Le module d'autorisation 1111, l'unité de conversion 1112, le répéteur amplificateur 1113 et le circulateur 1116 sont logés dans un boîtier 1117 disposé au moins en partie dans le compartiment de nacelle 1. L'unité de conversion 1112 est connectée entre, d'une part, le connecteur BNC 1114 et l'antenne externe 1115 et, d'autre part, le répéteur amplificateur 1113. Elle est agencée pour convertir un signal dans un premier protocole de communication en un signal dans un second protocole de communication, et inversement. Le premier protocole de communication est compatible avec le dispositif interrogateur 12. Il s'agit par exemple du protocole Wifi. Le second protocole de communication est un protocole de communication RFID compatible avec les étiquettes RFID 13. L'unité de conversion 1112 est ainsi agencée pour convertir un signal d'interrogation Wifi en un signal d'interrogation RFID et pour convertir un signal de réponse RFID en un signal de réponse Wifi. Le répéteur amplificateur 1113 est connecté entre l'unité de conversion 1112 et le circulateur 1116. Il permet d'amplifier le signal d'interrogation en sortie de l'unité de conversion de façon à ce que l'antenne interne 112 émette un signal RFID suffisamment puissant pour atteindre l'ensemble des étiquettes RFID 13. Le circulateur 1116 est connecté entre le répéteur amplificateur 1113 et l'antenne interne 112. Il permet à tout signal de réponse provenant de l'antenne interne 112 de contourner le répéteur amplificateur 1113 et d'être injecté directement dans l'unité de conversion 1112. Le module d'autorisation 1111 est agencé pour recevoir une information d'état moteur et empêcher ou autoriser l'émission d'un signal RF d'interrogation en fonction de cette information. L'information d'état moteur est relative à l'état allumé ou éteint du turboréacteur. Elle provient par exemple d'un système de régulation électronique numérique à pleine autorité du moteur, mieux connu sous l'acronyme FADEC pour l'expression anglo-saxonne « Full Authority Digital Engine Control ». Dans cet exemple de réalisation, le module d'autorisation 1111 pilote le répéteur amplificateur 1113 de manière à empêcher l'émission de tout signal RF d'interrogation par l'antenne interne 112 lorsque le turboréacteur est allumé et à amplifier tout signal RF d'interrogation lorsque le turboréacteur est éteint. Le connecteur BNC 1114 et l'antenne externe 1115 sont montés sur le boîtier 1117, de manière à déboucher à l'extérieur du compartiment de nacelle 1. Ils forment des points d'accès du dispositif d'interface 111, à savoir respectivement un point d'accès filaire et un point d'accès sans fil. L'antenne interne 112 est disposée dans le compartiment de nacelle 1, de manière à pouvoir communiquer avec les étiquettes RFID 13 sans avoir à traverser la paroi de nacelle 2. Elle est par exemple montée sur une surface interne de la paroi de nacelle 2. Dans l'exemple de la figure 1, l'antenne interne 112 est une antenne dipolaire. Néanmoins, tout type d'antenne apte à émettre et recevoir des signaux radiofréquences (RF) compatibles avec un protocole de communication RFID peut être utilisé.

Le dispositif interrogateur 12, également appelé « lecteur RFID », comprend un module de communication sans fil équipé d'une antenne 121 et agencé pour communiquer avec le système de contrôle 11 via son antenne externe 1115. Le module de communication est agencé pour communiquer avec le système de contrôle 11 selon le premier protocole de communication, à savoir un protocole Wifi dans cet exemple de réalisation. Le dispositif interrogateur 12 pourrait également comporter un connecteur BNC apte à être connecté au connecteur BNC 1114 du dispositif d'interface 111, par exemple par l'intermédiaire d'un câble coaxial. Le dispositif interrogateur 12 est agencé pour émettre un signal d'interrogation à destination des étiquettes RFID 13, de manière à déclencher l'émission, par chaque étiquette RFID 13 ayant reçu ce signal, d'un signal de réponse encodant des informations contenues dans sa puce électronique 131. Le dispositif interrogateur 12 comporte également un afficheur 122, des boutons de commande 123 et une batterie, non représentée. L'afficheur 122 permet d'afficher les informations récoltées dans les étiquettes RFID 13. Les boutons de commande 123 permettent de commander le dispositif interrogateur 12. En particulier, un bouton permet de déclencher l'émission d'un signal d'interrogation par l'antenne 121. La batterie est agencée pour pouvoir alimenter les différents éléments du dispositif interrogateur 12 et le rendre autonome.

Il est à noter que le dispositif d'interface 111 pourrait comporter une pluralité d'antennes internes, ces antennes étant disposées en différentes positions à l'intérieur du compartiment de nacelle 1 afin d'atteindre les différentes étiquettes RFID 13 réparties dans le turboréacteur. Par ailleurs, il a été considéré, dans l'exemple de réalisation de la figure 1, que le dispositif interrogateur 12 fonctionnait avec un protocole de communication autre qu'un protocole de communication RFID. Le dispositif interrogateur 12 pourrait cependant fonctionner avec ce protocole, rendant inutile la présence de l'unité de conversion 1112. Le répéteur amplificateur 1113 et le circulateur 1116 pourraient également être supprimés, notamment lorsque le signal d'interrogation est injecté dans le dispositif d'interface 111 par le connecteur BNC 1114. Dans ce cas, la puissance de ce signal peut être déjà suffisante pour atteindre toutes les étiquettes RFID 13. Le module d'autorisation 1111 peut aussi être supprimé, notamment lorsque le signal d'interrogation est injecté dans le dispositif d'interface 111 par le connecteur BNC 1114, puisqu'un opérateur n'est autorisé à approcher le turboréacteur que s'il est à l'arrêt.

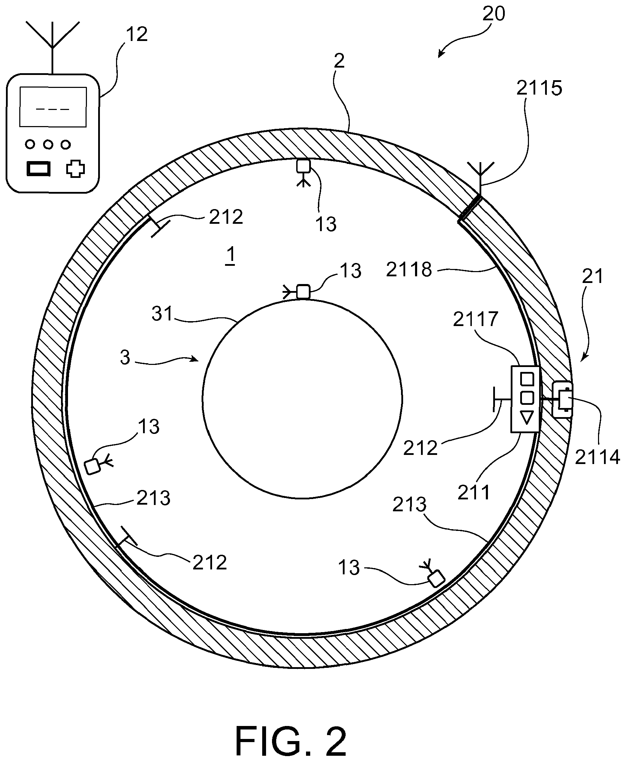

La figure 2 représente schématiquement, dans une vue en coupe transversale, un turboréacteur d'aéronef 3 équipé d'un deuxième exemple d'ensemble de contrôle de pièces selon l'invention. Le turboréacteur 3 comporte un coeur 31 formé par un ensemble de pièces et/ou de composants disposés dans un compartiment de nacelle 1 délimité par une paroi de nacelle 2. L'ensemble de contrôle 20 comporte un système de contrôle 21, un dispositif interrogateur 12 et quatre étiquettes RFID 13. Le dispositif interrogateur 12 et les étiquettes RFID 13 sont identiques à ceux de la figure 1. Le système de contrôle 21 comprend un dispositif d'interface 211, trois antennes internes 212 et des câbles coaxiaux 213 reliant les antennes internes 212 au dispositif d'interface 211. Le dispositif d'interface 211 est analogue au dispositif d'interface 111 décrit en référence à la figure 1. Il s'en distingue en ce qu'il comporte un connecteur BNC 2114 logé dans l'épaisseur de la paroi de nacelle 2 et une antenne externe 2115 déportée du boîtier 2117 et reliée à lui par un câble coaxial 2118, de préférence blindé.

Les exemples d'ensemble de contrôle de pièces d'un turboréacteur selon l'invention peuvent fonctionner de la manière suivante. Dans une première étape, un utilisateur actionne un bouton de commande du dispositif interrogateur 12 afin d'émettre un signal d'interrogation. Ce signal d'interrogation est reçu par l'antenne externe 1115, 2115, traité par le dispositif d'interface 111, 211 et réémis par chaque antenne interne 112, 212. Chaque étiquette RFID 13 qui reçoit ce signal d'interrogation renvoie un signal de réponse contenant des informations relatives à la pièce de turboréacteur qu'elle équipe. Ce signal de réponse est reçu par au moins une antenne interne 112, 212, éventuellement converti par l'unité de conversion 1112 du dispositif d'interface 111, 211 et réémis par l'antenne externe 1115, 2115. Le signal de réponse est alors reçu par le dispositif interrogateur 12 afin d'en extraire les informations issues des étiquettes RFID 13.

## Revendications

1. Système de contrôle de pièces d'un turboréacteur, le turboréacteur (3) étant logé dans un compartiment de nacelle (1) délimité par une paroi de nacelle (2) et comportant au moins une pièce équipée d'une étiquette RFID (13), le système de contrôle (11, 12) étant **caractérisé en ce qu'**il comprend :
▪ une antenne interne (112, 212) logée dans le compartiment de nacelle (1), l'antenne interne étant agencée pour permettre l'échange de signaux radiofréquences avec l'étiquette RFID (13),
▪ un dispositif d'interface (111, 211) disposé au moins en partie dans le compartiment de nacelle et comportant un point d'accès (1114, 1115, 2114, 2115) disposé hors du compartiment de nacelle, le dispositif d'interface étant agencé pour pouvoir être connecté à un dispositif interrogateur (12) agencé pour communiquer avec l'étiquette RFID, et
▪ une ligne de transmission (113, 213) connectant le dispositif d'interface (111, 211) à l'antenne interne (112, 212).

2. Système de contrôle selon la revendication 1, dans lequel le point d'accès du dispositif d'interface comprend un connecteur coaxial (1114, 2114).

3. Système de contrôle selon l'une des revendications 1 et 2, dans lequel le point d'accès du dispositif d'interface comprend une antenne externe (1115, 2115).

4. Système de contrôle selon la revendication 3, dans lequel le dispositif d'interface (111, 211) comporte, en outre, une unité de conversion (1112) connectée entre l'antenne externe (1115, 2115) et l'antenne interne (112, 212) et agencée pour convertir un signal dans un premier protocole de communication en un signal dans un second protocole de communication, et inversement, le premier protocole de communication étant compatible avec le dispositif interrogateur (12) et le second protocole de communication étant compatible avec l'étiquette RFID (13).

5. Système de contrôle selon l'une des revendications 3 et 4, comprenant en outre une antenne relais installée au sol, agencée pour transmettre des signaux radiofréquences provenant d'un dispositif interrogateur (12) vers l'antenne externe (1115, 2115) du dispositif d'interface, et réciproquement.

6. Système de contrôle selon l'une des revendications précédentes, dans lequel le dispositif d'interface (111, 211) comporte, en outre, un répéteur amplificateur (1113) bidirectionnel connecté entre l'antenne externe (1115, 2115) et l'antenne interne (112, 212).

7. Système de contrôle selon l'une des revendications précédentes, dans lequel le dispositif d'interface (111, 211) comporte, en outre, un module d'autorisation (1111) agencé pour recevoir une information d'état moteur relative à l'état allumé ou éteint du turboréacteur et empêcher ou autoriser l'émission d'un signal radiofréquence d'interrogation par l'antenne interne (112, 212) en fonction de ladite information d'état moteur.

8. Système de contrôle selon l'une des revendications précédentes, dans lequel l'étiquette RFID (13) contient une information relative à une identification de la pièce qu'elle équipe, une information relative à une durée de vie de ladite pièce et/ou une information relative à la présence d'une substance prédéterminée dans ladite pièce.

9. Système de contrôle selon l'une des revendications précédentes dans lequel, la paroi de nacelle (2) comportant un capot de soufflante et un capot de coeur, le point d'accès (1114, 1115, 2114, 2115) du dispositif d'interface est monté sur le capot de soufflante ou le capot de coeur.

10. Système de contrôle selon l'une des revendications précédentes, comprenant une pluralité d'antennes internes (212) logées dans le compartiment de nacelle (1) et une pluralité de lignes de transmission (213), les lignes de transmission connectant le dispositif d'interface (211) à chaque antenne interne (212).

11. Ensemble de contrôle de pièces d'un turboréacteur **caractérisé en ce qu'**il comprend un système de contrôle (11, 21) selon l'une des revendications 1 à 10, une étiquette RFID (13) apte à équiper une pièce d'un turboréacteur (3) et un dispositif interrogateur (12) agencé pour communiquer avec l'étiquette RFID via le système de contrôle.

12. Turboréacteur d'aéronef agencé pour être logé dans un compartiment de nacelle (1) délimité par une paroi de nacelle (2) et **caractérisé en ce qu'**il comprend un système de contrôle (11, 21) selon l'une des revendications 1 à 10 et une étiquette RFID (13) équipant une pièce du turboréacteur.

## Patentansprüche

1. System zur Kontrolle von Teilen eines Turbotriebwerks, wobei das Turbotriebwerk (3) in einem Gondelfach (2) untergebracht ist, und mindestens ein Teil beinhaltet, das mit einem RFID-Etikett (13) ausgestattet ist, wobei das System zur Kontrolle (11, 12) **dadurch gekennzeichnet ist, dass** es umfasst:
- eine interne Antenne (112, 212), die in dem Gondelfach (1) untergebracht ist, wobei die interne Antenne angeordnet ist, um den Austausch von Funkfrequenzsignalen mit dem RFID-Etikett (13) zu ermöglichen,
- eine Schnittstellenvorrichtung (111, 211), die mindestens teilweise in dem Gondelfach angeordnet ist, und einen Zugangspunkt (1114, 1115, 2114, 2115) beinhaltet, der außerhalb des Gondelfaches angeordnet ist, wobei die Schnittstellenvorrichtung angeordnet ist, um an eine Abfragevorrichtung (12) angeschlossen werden zu können, die angeordnet ist, um mit dem RFID-Etikett zu kommunizieren, und
- eine Übertragungsleitung (113, 213), die die Schnittstellenvorrichtung (111, 211) an die interne Antenne (112, 212) anschließt.

2. System zur Kontrolle nach Anspruch 1, wobei der Zugangspunkt der Schnittstellenvorrichtung einen Koaxial-Steckverbinder (1114, 2114) umfasst.

3. System zur Kontrolle nach einem der Ansprüche 1 und 2, wobei der Zugangspunkt der Schnittstellenvorrichtung eine externe Antenne (1115, 2115) umfasst.

4. System zur Kontrolle nach Anspruch 3, wobei die Schnittstellenvorrichtung (111, 112) weiter eine Umwandlungseinheit (1112) beinhaltet, die zwischen der externen Antenne (1115, 2115) und der internen Antenne (112, 212) angeschlossen ist, und angeordnet ist, um ein Signal in einem ersten Kommunikationsprotokoll in ein Signal in einem zweiten Kommunikationsprotokoll und umgekehrt umzuwandeln, wobei das erste Kommunikationsprotokoll mit der Abfragevorrichtung (12) kompatibel ist, und das zweite Kommunikationsprotokoll mit dem RFID-Etikett (13) kompatibel ist.

5. System zur Kontrolle nach einem der Ansprüche 3 und 4, weiter eine Relaisantenne umfassend, die am Boden installiert ist, die angeordnet ist, um Funkfrequenzsignale, die von einer Abfragevorrichtung (12) stammen, zur externen Antenne (1115, 2115) der Schnittstellenvorrichtung, und umgekehrt, zu übertragen.

6. System zur Kontrolle nach einem der vorstehenden Ansprüche, wobei die Schnittstellenvorrichtung (111, 211) weiter einen bidirektionalen Verstärker (1113) beinhaltet, der zwischen der externen Antenne (1115, 2115) und der internen Antenne (112, 212) angeschlossen ist.

7. System zur Kontrolle nach einem der vorstehenden Ansprüche, wobei die Schnittstellenvorrichtung (111, 211) weiter ein Zulassungsmodul (1111) beinhaltet, das angeordnet ist, um eine Motorzustandsinformation in Bezug auf den eingeschalteten oder ausgeschalteten Zustand des Turbotriebwerks zu empfangen, und die Sendung eines Abfrage-Funkfrequenzsignals durch die interne Antenne (112, 212) in Abhängigkeit von der Motorzustandsinformation zu verhindern oder zuzulassen.

8. System zur Kontrolle nach einem der vorstehenden Ansprüche, wobei das RFID-Etikett (13) eine Information in Bezug auf eine Identifizierung des Teils, das es bestückt, eine Information in Bezug auf eine Lebensdauer des Teils und/oder eine Information in Bezug auf das Vorhandensein einer vorbestimmten Substanz in dem Teil enthält.

9. System zur Kontrolle nach einem der vorstehenden Ansprüche, wobei der Zugangspunkt (1114, 1115, 2114, 2115) der Schnittstellenvorrichtung, da die Gondelwand (2), die eine Gebläseabdeckung und eine Kernabdeckung beinhaltet, auf der Gebläseabdeckung oder der Kernabdeckung montiert ist.

10. System zur Kontrolle nach einem der vorstehenden Ansprüche, umfassend eine Vielzahl von internen Antennen (212), die in dem Gondelfach (1) untergebracht sind, und eine Vielzahl von Übertragungsleitungen (213), wobei die Übertragungsleitungen die Schnittstellenvorrichtung (211) an jede interne Antenne (212) anschließt.

11. Einheit zur Kontrolle von Teilen eines Turbotriebwerks, **dadurch gekennzeichnet, dass** sie ein System zur Kontrolle (11, 21) nach einem der Ansprüche 1 bis 10, ein RFID-Etikett (13), das imstande ist, ein Teil eines Turbotriebwerks (3) auszurüsten, und eine Abfragevorrichtung (12) umfasst, die angeordnet ist, um mit dem RFID-Etikett über das System zur Kontrolle zu kommunizieren.

12. Turbotriebwerk eines Luftfahrzeugs, das angeordnet ist, um in einem Gondelfach (1) untergebracht zu werden, das durch eine Gondelwand (2) begrenzt ist, und **dadurch gekennzeichnet, dass** es ein System zur Kontrolle (11, 21) nach einem der Ansprüche 1 bis 10 und ein RFID-Etikett (13) umfasst, das ein Teil des Turbotriebwerks bestückt.

## Claims

1. A system for verifying turbojet engine parts, the turbojet engine (3) being accommodated in a nacelle compartment (1) delimited by a nacelle wall (2) and including at least one part equipped with an RFID tag (13), the verification system (11, 12) being **characterized in that** it comprises:
▪ an inner antenna (112, 212) accommodated in the nacelle compartment (1), the inner antenna being arranged to allow the exchange of radiofrequency signals with the RFID tag (13),
▪ an interface device (111, 211) located at least partially inside the nacelle compartment and including an access point (1114, 1115, 2114, 2115) located outside the nacelle compartment, the interface device being arranged to be able to be connected to an interrogator device (12) arranged to communicate with the RFID tag, and
▪ a transmission line (113, 213) connecting the interface device (111, 211) to the inner antenna (112, 212).

2. The verification system according to claim 1, wherein the access point of the interface device comprises a coaxial connector (1114, 2114).

3. The verification system according to any one of claims 1 and 2, wherein the access point of the interface device comprises an outer antenna (1115, 2115).

4. The verification system according to claim 3, wherein the interface device (111, 211) further comprises a conversion unit (1112) connected between the outer antenna (1115, 2115) and the inner antenna (112, 212) and arranged to convert a signal in a first communication protocol into a signal in a second communication protocol, and conversely, the first communication protocol being compatible with the interrogator device (12) and the second communication protocol being compatible with the RFID tag (13).

5. The verification system according to one of claims 3 and 4, further comprising a relay antenna installed on the ground, arranged to transmit radiofrequency signals originating from an interrogator device (12) to the outer antenna (1115, 2115) of the interface device, and reciprocally.

6. The verification system according to one of the preceding claims, wherein the interface device (111, 211) further includes a bidirectional repeater amplifier (1113) connected between the outer antenna (1115, 2115) and the inner antenna (112, 212).

7. The verification system according to one of the preceding claims, wherein the interface device (111, 211) further includes an authorisation module (1111) arranged to receive engine status information relative to the switched on or switched off state of the turbojet engine and prevent or authorise the emission of a radiofrequency interrogation signal by the inner antenna (112, 212) according to said engine status information.

8. The verification system according to one of the preceding claims, wherein the RFID tag (13) contains information relative to an identification of the part that it equips, information relative to a lifetime of said part and/or information relative to the presence of a predetermined substance in said part.

9. The verification system according to one of the preceding claims wherein, the nacelle wall (2) including a fan cowl and a core cowl, the access point (1114, 1115, 2114, 2115) of the interface device is mounted on the fan cowl or the core cowl.

10. The verification system according to one of the preceding claims, comprising a plurality of inner antennas (212) accommodated in the nacelle compartment (1) and a plurality of transmission lines (213), the transmission lines connecting the interface device (211) to each inner antenna (212).

11. An assembly for verifying turbojet engine parts **characterized in that** it comprises a verification system (11, 21) according to one of claims 1 to 10, an RFID tag (13) able to equip a part of a turbojet engine (3) and an interrogator device (12) arranged to communicate with the RFID tag via the verification system.

12. An aircraft turbojet engine arranged to be accommodated in a nacelle compartment (1) delimited by a nacelle wall (2) and **characterized in that** it comprises a verification system (11, 21) according to one of claims 1 to 10 and an RFID tag (13) equipping a turbojet engine part.
